# EUROPÄISCHE PATENTANMELDUNG

(11) **EP 4 763 390 A1**
(43) Veröffentlichungstag der Anmeldung: **24.06.2026**
(21) Anmeldenummer: 25224178.1
(22) Anmeldetag: 17.12.2025
(51) Int. Cl.: B23D 21/00, B23D 33/02, B23D 17/04, B23D 29/00

(54) **SCHNEIDEVORRICHTUNG INSBESONDERE ROHRSCHNEIDEVORRICHTUNG**

(30) Priorität: 23.12.2024 DE 102024212301
(71) Anmelder: Robert Bosch GmbH, 70442 Stuttgart (DE)
(72) Erfinder: Schoenherr, Maximilian, 71384 Weinstadt (DE); Fischer, Tobias, 70771 Leinfelden-Echterdingen (DE); Doll, Kevin, 73650 Winterbach (DE)

(57) **Zusammenfassung**

Die Erfindung bezieht sich auf eine Schneidevorrichtung, insbesondere Rohrschneidevorrichtung, mit einer Schneideinheit zum Schneiden eines zu schneidenden Werkstücks, mit einer Auflageeinheit zur Auflage des zu schneidenden Werkstücks und mit einer Halteeinheit zum Halten der Auflageeinheit.

Es wird vorgeschlagen, dass die Halteeinheit ein erstes, insbesondere freies, Ende und ein zweites, insbesondere freies, Ende aufweist, wobei die Schneideinheit in einem Aufnahmezustand zwischen diesen beiden Enden angeordnet ist

## Beschreibung

Die Erfindung bezieht sich auf eine Schneidevorrichtung nach dem Oberbegriff des Anspruchs 1.

In der US 2007/0193035 A1 wird eine Rohrschere mit mehreren Aufnahmebereichen zur Aufnahme von Rohren unterschiedlicher Durchmesser offenbart.

Der Erfindung liegt die Aufgabe zugrunde, mit einfachen konstruktiven Maßnahmen eine Schneidvorrichtung zu verbessern.

Die Aufgabe wird gelöst mit einer Schneidevorrichtung, insbesondere Rohrschneidevorrichtung, mit einer Schneideinheit zum Schneiden eines zu schneidenden Werkstücks, mit einer Auflageeinheit zur Auflage des zu schneidenden Werkstücks.

Es wird vorgeschlagen, dass die Auflageeinheit derart ausgebildet ist, dass sich die Auflageeinheit an das zu bearbeitende Werkstück, insbesondere eine Form des Werkstücks, anpasst.

Dadurch kann auf besonders einfache Weise eine Schneidvorrichtung zum Schneiden beispielsweise von Rohren bereitgestellt werden, welche bei einem Schneidvorgang eine Deformation eines Rohrquerschnitts des Rohrs vermindert oder verhindert. Dadurch kann das Rohr besonders effizient verarbeitet werden. Dadurch können Zwischenschritte in Form eines Entformens einer Deformation des Rohrs vermieden werden. Auch kann reduziert oder verhindert werden, dass Mikrorisse bei einer Deformation des Rohres entstehen können, welche nur schwer erkennbar und insbesondere vermeidbar sind, allerdings zu einer Materialschwächung und einem damit verbundenen Risiko einer späteren Schwachstelle bei verlegten Rohren führen können.

Die Schneidvorrichtung kann als eine Rohrschneidvorrichtung ausgebildet sein. Die Schneidvorrichtung kann zum Schneiden von, insbesondere aus einem Kunststoff, einem Metall und/oder einem Verbund dieser Werkstoffe gebildeten, Rohren, vorgesehen sein. Die Schneidvorrichtung kann als eine Schneidschere ausgebildet sein. Die Schneidvorrichtung kann dazu vorgesehen sein, in einem Zustand ein Rohr aufzunehmen und/oder zu halten. Die Schneidvorrichtung kann elektrisch und/oder mechanisch betätigbar sein.

Die Schneidvorrichtung kann an einer, insbesondere tragbaren und/oder einhändig bedienbaren, Handwerkzeugmaschine angeordnet und ausgebildet sein. Die Handwerkzeugmaschine kann dazu vorgesehen sein, die mit einer einzigen Hand gehalten und bedienbar zu sein. Die Handwerkzeugmaschine kann kompakt und leicht ausgebildet sein, das dem Benutzer ermöglicht, die Handwerkzeugmaschine bequem mit einer Hand zu bedienen. Handwerkzeugmaschine hat eine Länger von weniger als 50 cm, insbesondere weniger als 40 cm, vorzugsweise weniger als 30 cm, und/oder eine Breite von weniger als 30 cm, insbesondere wenig als 20 cm, und/oder eine Höhe von weniger als 20 cm, insbesondere weniger als 10 cm, und/oder ein Gewicht von weniger als 3 kg, insbesondere weniger als 2 kg, vorzugsweise weniger als 1 kg. Die Handwerkzeugmaschine weist insbesondere eine, insbesondere ergonomisch geformte, Griffeinheit auf, welche insbesondere eine sichere und komfortable Handhabung ermöglicht. Dadurch kann ein Bediener die Handwerkzeugmaschine besonders mühelos manövrieren und verschiedene handwerkliche Tätigkeiten auszuführen. Die Handwerkzeugmaschine kann eine Antriebseinheit, insbesondere einen Elektromotor, zum Antrieb der Schneidvorrichtung aufweisen. Die Handwerkzeugmaschine kann eine elektrische Speichereinheit, insbesondere eine Akkueinheit, zur Versorgung der Antriebseinheit mit Energie aufweisen.

Die Schneideinheit kann sich länglich erstrecken und/oder eine Erstreckung der Handwerkzeugmaschine begrenzen. Die Schneideinheit kann ein erstes, insbesondere festes (bzw. beweglich gelagertes), Ende und ein dem ersten Ende abgewandtes zweites, insbesondere freies, Ende aufweisen. Die Schneideinheit kann um eine Drehachse am ersten Ende drehbar gelagert sein, um eine Schneidbewegung durchzuführen. Die Schneideinheit kann dazu vorgesehen sein, mittels einer Drehbewegung um die Drehachse eine Schneidbewegung durchzuführen. Die Schneideinheit kann als ein Schneidmesser ausgebildet sein. Die Schneideinheit kann eine Schneidkante zum Schneiden von Werkstücken aufweisen. Die Schneidkante kann die Schneideinheit begrenzen. Die Schneidkante kann, insbesondere vollständig, geradlinig und/oder, insbesondere vollständig, gekrümmt ausgebildet sein. Die Schneidkante kann eine Vielzahl von Schneidkantenabschnitten aufweisen. Die Schneidkantenabschnitte können aneinander anschließen. Die Schneidkantenabschnitte können einander gegenüber angewinkelt sein. Die Schneidkantenabschnitte können einen, insbesondere stumpfen, Winkel, insbesondere von größer als 90° und/oder kleiner als 180°, aufweisen. Die Schneidkantenabschnitte können eine Schneidspitze bilden. Die Schneidspitze kann zwischen dem ersten (bzw. festen) Ende und dem zweiten (bzw. freien) Ende der Schneideinheit angeordnet sein.

Auflageeinheit derart ausgebildet ist, dass sich die Auflageeinheit an das zu bearbeitende Werkstück, insbesondere eine Form des Werkstücks, anpasst. Die Auflageeinheit kann dabei derart ausgebildet sein, dass die Auflageeinheit einer Form des Werkstücks in etwa entspricht und/oder aufgrund einer, insbesondere elastischen, Auslenkung entsprechend anpasst. Die Auflageeinheit kann derart ausgebildet sein, dass sich die Auflageeinheit abschnittsweise an das zu bearbeitende Werkstück, insbesondere eine Form des Werkstücks, anpasst. Die Auflageeinheit kann dazu vorgesehen sein, ein zu bearbeitendes Werkstück an einer ersten Seite zu umgeben und an einer von der ersten Seite abgewandten zweiten Seite offen zu halten. Die Auflageeinheit kann dazu vorgesehen sein, einen Umfangsbereich des zu bearbeitenden Werkstücks an einer ersten Seite um höchstens 50 %, insbesondere um höchstens 40 %, bevorzugt um höchstens 30 %, besonders bevorzugt um höchstens des 25 %, und/oder um mindestens 10 %, insbesondere um mindestens 20 %, vorzugsweise um mindestens 25 %, bevorzugt um mindestens 30 %, besonders bevorzugt um mindestens 35 %, zu umgeben und/oder, insbesondere maximal, zu kontaktieren. Es versteht sich, dass die Auflageeinheit das zu bearbeitende Werkstück in einem Auflagezustand des Werkstücks an der Auflageeinheit umgibt bzw. kontaktiert.

Es kann zweckmäßig sein, dass die Schneideinheit gegenüber der Auflageeinheit, insbesondere bei einem Schneidvorgang, beweglich gelagert ist. Die Schneideinheit kann, insbesondere um eine Rotationsachse, beweglich gelagert sein. Die Schneideinheit kann mittels einer elektrischen Antriebseinheit bewegt/betrieben werden. Die Schneideinheit kann ein Schneidelement aufweisen. Das Schneidelement kann eine Schneidkante aufweisen. Die Schneidkante kann einen ersten Schneidkantenabschnitt aufweisen. Die Schneidkante kann einen ersten Schneidkantenabschnitt aufweisen. Die Schneidkantenabschnitte können geradlinig ausgebildet sein. Die Schneidkantenabschnitte können einander gegenüber angewinkelt sein. Die Schneidkantenabschnitte können einen stumpfen Winkel bilden.

Die Schneideinheit kann einen Schneidbereich, insbesondere entlang einer Schneidebene, begrenzen. Die Schneideinheit kann in einem Aufnahmezustand einen offenen Schneidbereich zur Aufnahme von einem zu bearbeitenden Werkstück bilden. Die Schneideinheit kann in einem Schneidzustand einen geschlossenen Schneidbereich zum Bearbeiten von einem zu bearbeitenden Werkstück bilden. In einem geschlossenen Schneidbereich kann der Schneidbereich von der Schneideinheit und der Auflageeinheit, insbesondere in einer Ebene um 360°, begrenzt sein. Dadurch kann eine besonders einfache Aufnahme eines Werkstücks in einem Aufnahmezustand und ein besonders einfaches Halten des Werkstücks in einem Schneidzustand ermöglicht werden.

Es kann zweckmäßig sein, dass die Schneidvorrichtung eine, insbesondere eine einzige, Aufnahmevertiefung zur Aufnahme eines Werkstücks aufweist. Insbesondere kann vorgesehen sein, dass die Aufnahmevertiefung Werkstücke unterschiedlicher (Außen-)Abmessungen, insbesondere Durchmesser, aufzunehmen, insbesondere um diese mittels der Schneideinheit zu schneiden. Die Aufnahmevertiefung kann als eine Art Mulde ausgebildet sein. Die Aufnahmevertiefung kann, insbesondere im Wesentlichen, durch die Auflageeinheit und/oder die Schneideinheit begrenzt sein. Die Aufnahmevertiefung kann in einem Auflagezustand offen ausgebildet sein. Die Aufnahmevertiefung kann in einem Schneidzustand geschlossen ausgebildet sein, sodass die Auflagevertiefung in zumindest einer Ebene, insbesondere um 360°, umgeben ist. Die Aufnahmevertiefung kann gebogen, insbesondere an das zu schneidende Werkstück angepasst, sein. Die Aufnahmevertiefung kann c-förmig ausgebildet sein. Die Aufnahmevertiefung kann eine Vertiefung aufweisen, welcher das zu schneidende Werkstück Mehr als einer Hälfte einer Höhenerstreckung des Werkstücks aufnimmt. Dadurch kann das Werkstück besonders zuverlässig in der Schneidvorrichtung gehalten werden.

Es kann zweckmäßig sein, dass die Schneidvorrichtung eine Halteeinheit zum Halten der Auflageeinheit, insbesondere eines Auflageelements, aufweist. Die Halteeinheit kann einen Schneidbereich begrenzen. Die Halteeinheit kann gebogen, insbesondere im Wesentlichen c-förmig, ausgebildet sein. Die Halteeinheit kann ein Halteelement aufweisen. Das Halteelement kann ein erstes Ende und ein dem ersten Ende abgewandtes zweites Ende aufweisen. Das erste Ende und das zweite Ende können samt einem die beiden Enden verbindenden Halteabschnitt verbunden sein. Die Enden können einen Aufnahmebereich zur Aufnahme eines zu bearbeitenden Werkstücks begrenzen. Die Enden können an einer von der Schneideinheit, insbesondere einem beweglich gelagerten Ende der Schneideinheit, abgewandten Seite angeordnet sein. Die Enden können in eine von der Schneideinheit weg weisenden Richtung ausgerichtet sein.

Es kann zweckmäßig sein, dass die Halteeinheit ein weiteres Halteelement aufweist. Das Halteelement kann drehbar gelagert sein. Das weitere Halteelement kann drehbar gelagert sein.

Das weitere Halteelement kann ein erstes Ende und ein von dem ersten Ende abgewandtes zweites Ende aufweisen. Das erste Ende kann beweglich, insbesondere drehbar, gelagert sein. Das zweite Ende kann als ein freies, insbesondere frei vorstehendes, Ende ausgebildet sein.

Es kann zweckmäßig sein, dass die Auflageeinheit ein, insbesondere einziges, Auflageelement zur Auflage eines zu bearbeitenden Werkstücks aufweist. Es kann zweckmäßig sein, dass das Auflageelement einteilig ausgebildet ist. Es kann zweckmäßig sein, dass das Auflageelement elastisch ist. Das Auflageelement kann aus einem elastischen Werkstoff gebildet sein. Unter "elastisch" kann die Eigenschaft eines Körpers oder Werkstoffes, unter Krafteinwirkung seine Form zu verändern und bei Wegfall der einwirkenden Kraft in die Ursprungsform zurückzukehren, wie beispielsweise bei einer Feder und/oder einem Gummi. Das Auflageelement kann aus einem biegeschlaffen Werkstoff gebildet sein. Unter "biegeschlaff" kann insbesondere forminstabil, formlabil oder nicht formstabil verstanden werden. Unter "biegeschlaff" kann Auflageelement verstanden werden, welches durch einen niedrigen Elastizitätsmodul und/oder geringe Dehnsteifigkeit und/oder große Verformungen bereits infolge geringer Kraft- und Momentbeanspruchung verformt, wie beispielsweise bei einem Riemen, einem Gurtband oder einem Flachseil. Das Auflageelement kann aus einem zugfesten Werkstoff gebildet sein. Das Auflageelement kann eine hohe Zugfestigkeit aufweisen. Insbesondere kann das Auflageelement aus, insbesondere zu 100%, aus einem Polyester, insbesondere einem hochfesten Polyester (PES HF), gebildet sein. Das Auflageelement kann eine Reißfestigkeit von mindestens 500 kg, insbesondere mindestens 1000 kg, vorzugsweise mindestens 1500 kg, bevorzugt mindestens 2000 kg, aufweisen. Das Auflageelement kann eine Länge aufweisen, welche, insbesondere deutlich, länger ist als eine Breite des Auflageelements. Das Auflageelement kann eine Breite aufweisen, welche, insbesondere deutlich, breiter ist als eine Tiefe/Stärke des Auflageelements. Das Auflageelement kann rollbar sein. Es versteht sich, dass ein Fachmann einen für die Verwendung des vorliegenden Gegenstands geeigneten Werkstoff, insbesondere hinsichtlich Zugfestigkeit, Biegeschlaffheit und Elastizität wählt.

Es kann zweckmäßig sein, dass das Auflageelement als ein Riemen oder als eine Kette ausgebildet ist. Als ein Gurt, Gurtband oder Flachseil kann ein, insbesondere kräftiges, bandförmiges Gewebe bezeichnet werden, welches zum Befestigen oder Fixieren von Gegenständen oder von Lebewesen dient. Das Auflageelement kann insbesondere im Wesentlichen aus einem Textil- und/oder aus einem Kunststoffwerkstoff gebildet sein. Das Auflageelement kann aus einem Metallwerkstoff gebildet sein.

Das Auflageelement kann an der Halteeinheit angeordnet sein. Das Auflageelement kann ein erstes Ende und ein dem ersten Ende abgewandtes zweites Ende aufweisen. Die Enden können an der Halteeinheit angeordnet, insbesondere gelagert, vorzugsweise drehbar gelagert, sein. Die Enden können fest an der Halteeinheit angeordnet bzw. gelagert sein. Das Auflageelement kann zwischen den beiden Enden beweglich gelagert, insbesondere freihängend, sein. Das Auflageelement kann eine, insbesondere maximale, Erstreckung aufweisen, welche gegenüber einem Abstand der beiden an der Halteeinheit angeordneten Enden um höchstens 200 %, insbesondere höchstens 180 %, vorzugsweise höchstens 150 %, bevorzugt höchstens 130 %, besonders bevorzugt höchstens 100 %, und/oder um mindestens 20 %, insbesondere mindestens 50 %, vorzugsweise mindestens 80 %, bevorzugt um mindestens 100 %, besonders bevorzugt um mindestens 120 %, größer ist. Das Auflageelement kann sich im Wesentlichen analog zu der Halteeinheit erstrecken. Dadurch kann auf besonders einfach und zuverlässige Abstützung des Werkstücks erreicht werden.

Es kann zweckmäßig sein, dass die Auflageeinheit ein weiteres Auflageelement aufweist. Das weitere Auflageelement kann dem Auflageelement gegenüberliegend angeordnet sein. Das weitere Auflageelement kann analog zu dem Auflageelement ausgebildet sein.

Es kann zweckmäßig sein, dass die Schneideinheit, insbesondere in einem Aufnahmezustand, zwischen einem ersten Ende des Auflageelement und einem zweiten Ende des Auflageelements angeordnet ist. Die Schneideinheit kann sich entlang einer Verbindungsgeraden zwischen dem ersten Ende des Auflageelement und dem zweiten Ende des Auflageelements erstrecken. Die Schneideinheit kann, insbesondere in einem Schneidzustand, an einer von den beiden Enden abgewandten Seite angeordnet sein. Die Schneideinheit kann, insbesondere in einem Schneidzustand unterhalb der beiden Enden des Auflageelements angeordnet sein. Dadurch kann auf besonders einfache und zuverlässige Weise das Werkstück geschnitten werden.

Es kann zweckmäßig sein, dass die Schneideinheit in einem Schneidzustand an einer ersten Seite angeordnet und die beiden Enden des Auflageelements an einer von der ersten Seite abgewandten zweiten Seite angeordnet ist.

Es kann zweckmäßig sein, dass die Schneideinheit ein, insbesondere beweglich gelagertes, erstes Ende und ein dem ersten Ende abgewandtes, insbesondere freies, zweites Ende aufweist.

Es kann zweckmäßig sein, dass das Auflageelement, insbesondere in einem Auflagezustand, einen Flächenkontaktbereich mit dem zu bearbeitenden Werkstück bildet. Der Flächenkontaktbereich kann sich um das Werkstück herum erstrecken. Mittels dem Flächenkontaktbereich kann eine besonders vorteilhafte Kraftverteilung ermöglicht werden. Es kann zweckmäßig sein, dass das Auflageelement, insbesondere in einem Auflagezustand, einen ersten Punk- oder Linienkontaktbereich und einen zu dem ersten Punk- oder Linienkontaktbereich beabstandeten zweiten Punkt- oder Linienkontakt mit dem zu bearbeitenden Werkstück bildet.

Der Kraftbereich bzw. die Kontaktbereiche kann/können eine Kraftverteilung auf das zu bearbeitende Werkstück ermöglichen, wodurch einer Verformung des zu bearbeitenden Werkstücks entgegengewirkt wird. Beim Schneiden wirkende (Reaktions-) Kräfte können dabei in Umfangsrichtung um das zu bearbeitende Werkstück verteilt werden.

Es kann zweckmäßig sein, dass sich die Kontaktbereiche des Auflageelements um weniger als 180° und/oder mehr als 10° eines Umfangs des Werkstücks erstrecken. Das Auflageelement kann einen ersten Auflageabschnitt aufweisen. Das Auflageelement kann einen zweiten Auflageabschnitt aufweisen. Die Auflageabschnitte können den Kontaktbereich bzw. die Kontaktbereiche des Auflageelements begrenzen. Die Auflageabschnitte können in einem Schneidzustand und/oder in einem Auflagezustand einander gegenüber angewinkelt sein. Die Auflageabschnitte können in einem Schneidzustand und/oder in einem Auflagezustand einander gegenüber beabstandet sein. Die Auflageabschnitte können in einem, insbesondere jedem, Schneidzustand einander gegenüber nicht parallel sein. Insbesondere können in einem, insbesondere jedem, Schneidzustand die Auflageabschnitte einander gegenüber einen Öffnungswinkel aufweisen, welcher kleiner als 180°, insbesondere kleiner als 150°, vorzugsweise kleiner als 120°, bevorzugt kleiner als 90°, weiter bevorzugt kleiner als 60°, ferner bevorzugt kleiner als 45°, besonders bevorzugt kleiner als 30°, und/oder größer als 10°, insbesondere größer als 30°, vorzugsweise größer als 45 °, bevorzugt größer als 60°, weiter bevorzugt größer als 90°, ferner bevorzugt größer als 120°, besonders bevorzugt größer als 150°, ist.

Es kann zweckmäßig sein, dass die Schneideinheit, insbesondere das zweite Ende der Schneideinheit, in einem Auflagezustand, insbesondere in Richtung senkrecht zu einer Schneidebene betrachtet, beabstandet zur Aufnahmeeinheit ist und/oder in einem Schneidzustand, insbesondere das zweite Ende der Schneideinheit, mit der Aufnahmeeinheit überlappt.

Ein weiterer Aspekt der Erfindung betrifft eine Schneidevorrichtung, insbesondere Rohrschneidevorrichtung, mit einer Schneideinheit zum Schneiden eines zu schneidenden Werkstücks, mit einer Auflageeinheit zur Auflage des zu schneidenden Werkstücks und mit einer Halteeinheit zum Halten der Auflageeinheit. Es wird vorgeschlagen, dass die Halteeinheit ein erstes, insbesondere freies, Ende und ein zweites, insbesondere freies, Ende aufweist, wobei die Schneideinheit in einem Aufnahmezustand zwischen diesen beiden Enden angeordnet ist.

Die beiden Enden können voneinander abgewandt sein. Die beiden Enden können die dieselbe Richtung ausgerichtet sein. Die beiden Ende können jeweils ein Ende im Wesentlichen einer U-Form bilden. Die beiden Enden können einen Öffnungsbereich der Halteeinheit begrenzen. Die beiden Enden können in der Höhe versetzt zueinander angeordnet sein.

Die Schneideinheit ist das zentrale Element der Vorrichtung und dient dem eigentlichen Schneidvorgang des Werkstücks. Die Auflageeinheit ist so konzipiert, dass sie das zu schneidende Werkstück sicher und stabil in der gewünschten Position hält, um ein präzises und sauberes Schneiden zu gewährleisten. Die Halteeinheit kann die Auflageeinheit fixieren und stabilisieren. Die beiden Enden der Halteeinheit ermöglichen eine maximale Flexibilität und Zugänglichkeit. Diese freien Enden ermöglichen es, die Schneideinheit in einem speziellen Aufnahmezustand zwischen diesen beiden Enden der Halteeinheit zu positionieren. Durch diese Anordnung wird eine optimale Positionierung und Führung der Schneideinheit während des Schneidvorgangs sichergestellt, was zu einer verbesserten Handhabung und Präzision beim Schneiden von Werkstücken führt. Insbesondere bei der Bearbeitung von Rohren bietet diese Konstruktion erhebliche Vorteile, da sie eine gleichmäßige und kontrollierte Schnittführung ermöglicht und somit die Qualität und Genauigkeit des Schnitts erhöht.

Es kann zweckmäßig sein, dass die Auflageeinheit ein erstes Ende aufweist, welches mit dem ersten Ende der Halteeinheit verbunden ist und ein zweites Ende aufweist, welches mit dem zweiten Ende der Halteeinheit verbunden ist. Es kann ferner zweckmäßig sein, dass sich die Aufnahmeeinheit von dem ersten Ende bis zu dem zweiten Ende erstreckt. Es kann ferner zweckmäßig sein, dass die Aufnahmeeinheit, insbesondere einteilig oder als ein durchgängig verbundenes Teil, ausgebildet ist.

Diese Konfiguration sorgt für eine stabile und feste Verbindung zwischen der Auflageeinheit und der Halteeinheit, wodurch die Stabilität und Präzision der gesamten Schneidevorrichtung erhöht wird. Darüber hinaus kann es vorteilhaft sein, dass sich die Auflageeinheit von dem ersten Ende bis zu dem zweiten Ende der Halteeinheit erstreckt. Diese durchgehende Erstreckung gewährleistet eine gleichmäßige Unterstützung des zu schneidenden Werkstücks über die gesamte Länge der Auflageeinheit, was zu einer verbesserten Schnittqualität führt. Ferner kann es zweckmäßig sein, dass die Auflageeinheit einteilig oder als ein durchgängig verbundenes Teil ausgebildet ist. Eine einteilige oder durchgängig verbundene Auflageeinheit minimiert mögliche Schwachstellen und Verbindungsstellen, die zu Instabilitäten oder Ungenauigkeiten beim Schneiden führen könnten. Diese Konstruktion trägt somit zu einer robusteren und zuverlässigeren Schneidevorrichtung bei, die insbesondere bei der Bearbeitung von Rohren eine gleichmäßige und präzise Schnittführung ermöglicht.

Die Erfindung bezieht sich ferner auf eine Handwerkzeugmaschine mit einer Schneidvorrichtung zum Schneiden von zu bearbeitenden Werkstücken.

### Kurze Beschreibung der Zeichnungen

Weitere Vorteile ergeben sich aus der folgenden Zeichnungsbeschreibung. In der Zeichnung können Weiterbildungen der Erfindung dargestellt sein. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Hierbei zeigt:
- Fig. 1: eine perspektivische Ansicht einer ersten Ausführungsform einer erfindungsgemäßen Handwerkzeugmaschine,
- Fig. 2: ein Seitenansicht der Handwerkzeugmaschine aus Fig. 1,
- Fig. 3: eine perspektivische Ansicht einer weiteren Ausführungsform einer erfindungsgemäßen Handwerkzeugmaschine,
- Fig. 4: ein Seitenansicht der Handwerkzeugmaschine aus Fig. 3 und
- Fig. 5: eine Seitenansicht einer dritten Ausführungsform einer erfindungsgemäßen Handwerkzeugmaschine
In den folgenden Figuren sind gleiche Bauteile mit den gleichen Bezugszeichen versehen.

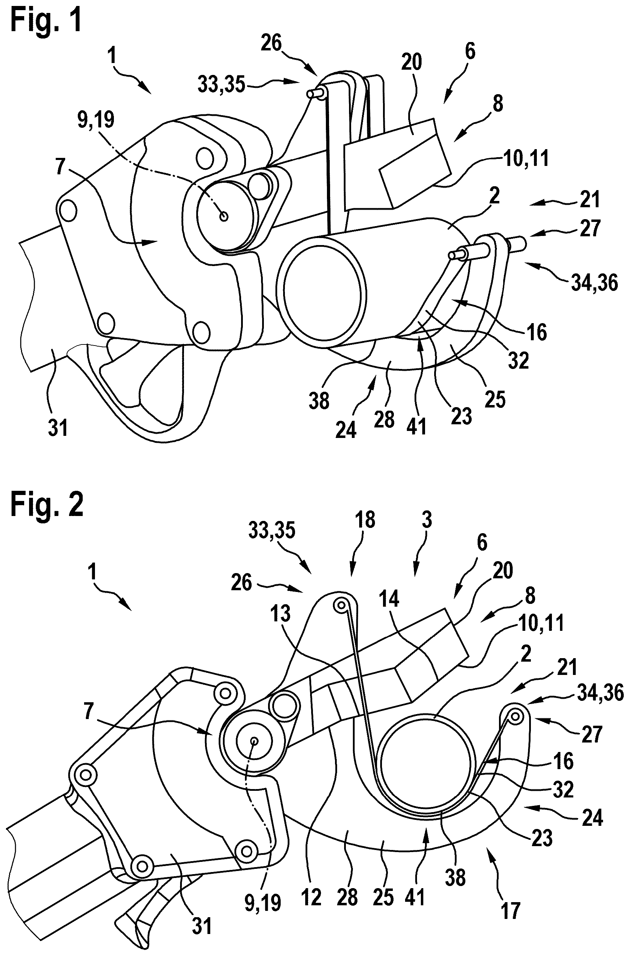

Fig. 1 zeigt eine als eine Rohrschere ausgebildete Handwerkzeugmaschine 1 zum Schneiden von einem zu schneidenden Werkstück bzw. einem Rohrelement 2. Die Handwerkzeugmaschine 1 weist eine Schneidvorrichtung 3 zum Schneiden von einem Rohrelement 2 auf. Die Schneidvorrichtung 3 ist als eine Rohrschneidevorrichtung ausgebildet und insbesondere dazu vorgesehen, weiche Rohrelemente 2 zu schneiden. Die Rohrelemente 2 sind dabei insbesondere aus einem weichen Werkstoff wie beispielsweise einem Aluminium, einem oder einem Verbund aus diesen Werkstoffen gebildet. Als Verbundwerkstoff kommt insbesondere ein Kunststoff-Alu-Verbund in Betracht, welches vielseitig eingesetzt wird und einem Fachmann bekannt ist. Die Schneidvorrichtung 3 ist dazu vorgesehen, in einem Zustand ein Rohrelement 2 aufzunehmen und zu halten. Die Schneidvorrichtung 3 ist elektrisch angetrieben.

Die Schneidvorrichtung 3 ist an einer tragbaren und einhändig bedienbaren Handwerkzeugmaschine 1 ausgebildet. Die Handwerkzeugmaschine 1 ist dazu vorgesehen, mit einer einzigen Hand gehalten und bedient zu werden. Die Handwerkzeugmaschine 1 ist derart kompakt und leicht ausgebildet, das dem Benutzer ermöglicht, die Handwerkzeugmaschine 1 bequem mit einer Hand zu halten und diese zu bedienen. Die Handwerkzeugmaschine 1 hat eine Länge von weniger als 30 cm oder eine Breite von weniger als 10 cm und ein Gewicht von weniger als 2 kg. Die Handwerkzeugmaschine 1 weist eine ergonomisch geformte Griffeinheit 4 auf, welche insbesondere eine sichere und komfortable Handhabung ermöglicht. Die Handwerkzeugmaschine 1 weist eine als ein Elektromotor ausgebildete Antriebseinheit (nicht gezeigt) zum Antrieb der Schneidvorrichtung 3 auf. Die Handwerkzeugmaschine 1 weist eine als eine Akkueinheit ausgebildete, elektrische Speichereinheit zur Versorgung der Antriebseinheit mit Energie auf.

Die vorliegend gezeigte Schneidevorrichtung 3 weist eine Schneideinheit 6, insbesondere eine Schereneinheit, zum Schneiden eines Rohrelements 2 auf. Die Schneideinheit 6 erstreckt sich länglich und begrenzt eine Längserstreckung der Handwerkzeugmaschine 1. Die Schneideinheit 6 weist ein festes drehbeweglich gelagertes antreibbares erstes Ende 7 und ein dem ersten Ende 7 abgewandtes freies zweites Ende 8 auf. Die Schneideinheit 6 ist am ersten Ende 7 um eine Drehachse 9 drehbar gelagert und führt eine Schneidbewegung durch. Die Schneideinheit 6 ist als ein Schneidmesser ausgeführt und dazu vorgesehen, mittels einer Drehbewegung um die Drehachse 9 eine Schneidbewegung durch das Rohrelement 2 durchzuführen. Die Schneideinheit 6 weist eine die Schneideinheit 6 begrenzende Schneidkante 10 zum Schneiden von Rohrelementen 2 auf. Die Schneidkante 10 weist eine Vielzahl von geradlinig ausgebildeten Schneidkantenabschnitten 11 auf, welche aneinander anschließen und eine durchgehende Schneidkante 10 bilden. Ein erster Schneidkantenabschnitt 12 ist gegenüber einem anschließenden zweiten Schneidkantenabschnitt 13 angewinkelt. Ein dritter Schneidkantenabschnitt 14 ist wiederum gegenüber dem ersten 12 und dem zweiten Schneidkantenabschnitt 13 angewinkelt. Der zweite 13 und der dritte Schneidkantenabschnitt 14 bilden einen stumpfen Winkel größer als 90° und kleiner als 180°. Der zweite 13 und der dritte Schneidkantenabschnitt 14 bilden eine Schneidspitze 15, welche zwischen dem ersten Ende 7 und dem zweiten Ende 8 der Schneideinheit 6 angeordnet ist.

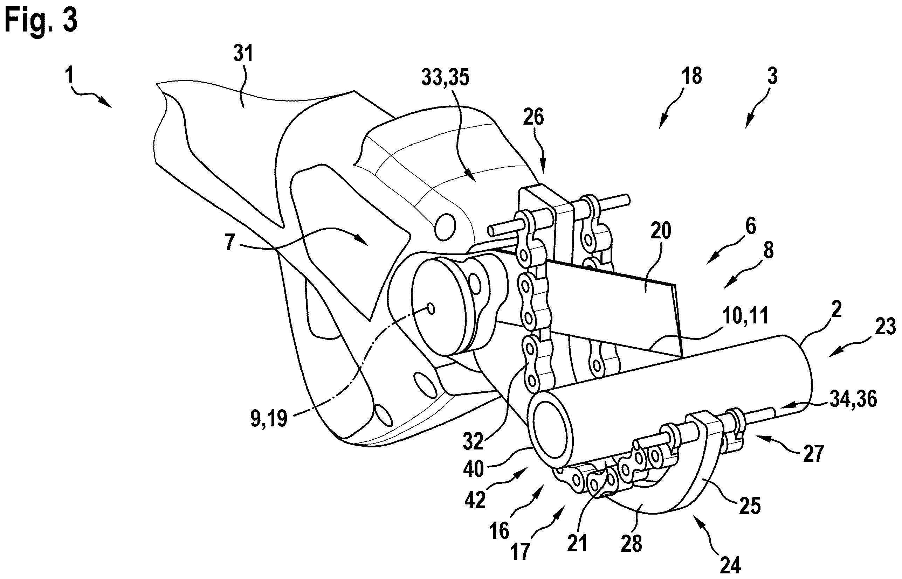

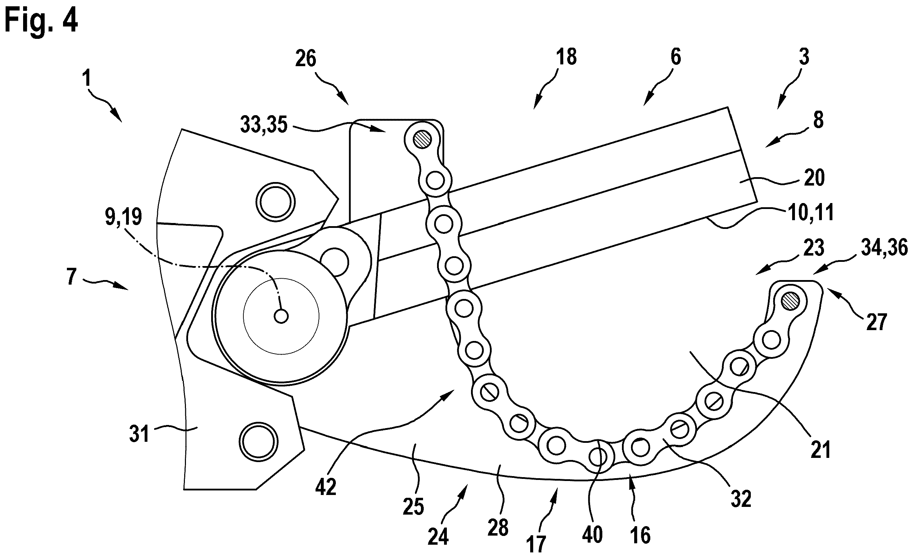

Die Schneidvorrichtung 3 weist eine Auflageeinheit 16 zur Auflage des Rohrelements 2 auf. Die Auflageeinheit 16 ist derart ausgebildet, dass sich die Auflageeinheit 16 an eine Form bzw. einen Außendurchmesser des Rohrelements 2 anpasst. Die Auflageeinheit 16 ist dabei derart ausgebildet, dass die Auflageeinheit 16 einer Form des Werkstücks in etwa entspricht oder aufgrund einer elastischen Auslenkung entsprechend anpasst (Fig. 1, 2 und 5). Die Auflageeinheit 16 ist derart ausgebildet, dass sich die Auflageeinheit 16 abschnittsweise an eine Form des Rohrelements 2 anpasst (Fig. 3 und 4). Die Auflageeinheit 16 ist dazu vorgesehen, ein Rohrelement 2 an einer ersten Seite 17 zu umgeben und an einer von der ersten Seite 17 abgewandten zweiten Seite 18 frei bzw. offen zu halten. Die Auflageeinheit 16 ist dazu vorgesehen, einen Umfangsbereich des Rohrelements 2 an einer ersten Seite 17 um höchstens 50 % und um mindestens 10 % zu umgeben oder zu kontaktieren. Es versteht sich, dass die Auflageeinheit 16 das Rohrelement 2 in einem Auflagezustand an der Auflageeinheit 16 umgibt bzw. kontaktiert.

Die Schneideinheit 6 ist gegenüber der Auflageeinheit 16 bei einem Schneidvorgang um eine Rotationsachse 19 beweglich gelagert. Die Schneideinheit 6 wird mittels einer elektrischen Antriebseinheit bewegt/betrieben. Die Schneideinheit 6 weist ein Schneidelement 20 auf. An dem Schneidelement 20 ist die Schneidkante 10 angeordnet, welche die Schneidkante 10 begrenzt. Die Schneideinheit 6 begrenzt einen Schneidbereich 21 entlang einer Schneidebene 22. Die Schneideinheit 6 bildet in einem Aufnahmezustand einen offenen Schneidbereich 21 zur Aufnahme von einem Rohrelement 2. Die Schneideinheit 6 bildet in einem Schneidzustand einen geschlossenen Schneidbereich 21 zum Bearbeiten von einem Rohrelement 2. In einem geschlossenen Schneidzustand ist der Schneidbereich 21 von der Schneideinheit 6 und der Auflageeinheit 16 in einer Ebene um 360° begrenzt.

Die Schneidvorrichtung 3 weist eine einzige Aufnahmevertiefung 23 zur Aufnahme eines Werkstücks auf. Die Aufnahmevertiefung 23 ist dazu vorgesehen, Rohrelemente 2 in der Aufnahmevertiefung 23 unterschiedlicher Durchmesser, aufzunehmen und zu halten. Mittels der Schneideinheit 6 kann das Rohrelement 2 in einem in der Aufnahmevertiefung 23 angeordneten Zustand geschnitten werden. Die Aufnahmevertiefung 23 ist als eine Art Mulde ausgebildet. Die Aufnahmevertiefung 23 weist eine Tiefe auf, welche größer ist als ein halber Durchmesser des Rohrelements 2 und/oder kleiner ist als ein Durchmesser des Rohrelements 2. Dadurch kann sichergestellt werden, dass das Rohrelement 2 bei einem Schneidvorgang in der Vertiefung gehalten ist. Die Aufnahmevertiefung 23 ist im Wesentlichen durch die Auflageeinheit 16 einerseits und durch die Schneideinheit 6 andererseits begrenzt. Die Aufnahmevertiefung 23 ist in einem Auflagezustand offen ausgebildet (Fig. 2 bis 5). Die Aufnahmevertiefung 23 ist in einem Schneidzustand geschlossen ausgebildet, sodass die Auflagevertiefung 23 in zumindest einer Ebene, insbesondere um 360°, umgeben ist. Die Aufnahmevertiefung 23 ist c-förmig, gebogen und an das Rohrelement 2 angepasst. Die Aufnahmevertiefung 23 weist eine Vertiefung auf, welche das Rohrelement 2 um mehr als einem halben Durchmesser des Rohrelements 2 aufnimmt. Vorliegend und insbesondere je nach Betrachtungswinkel ist das Rohrelement 2 vollständig in der Aufnahmevertiefung 23 angeordnet. Die Aufnahmevertiefung 23 kann eine Vertiefung aufweisen, welche größer ist als ein Durchmesser eines Rohrelements 2.

Die Schneidvorrichtung 3 weist eine Halteeinheit 24 zum Halten der Auflageeinheit 16 auf. Die Halteeinheit 24 begrenzt einen Schneidbereich 21 der Schneidvorrichtung 3. Die Halteeinheit 24 ist gebogen und im Wesentlichen c-förmig ausgebildet. Die Halteeinheit 24 weist ein aus einem Metall-Werkstoff gebildetes Halteelement 25 auf. Das Halteelement 25 weist ein erstes Ende 26 und ein dem ersten Ende 26 abgewandtes zweites Ende 27 auf. Das erste Ende 26 und das zweite Ende 27 sind mit einem die beiden Enden 26, 27 verbindenden Halteabschnitt 28 verbunden. Das Halteelement 25 begrenzt die Aufnahmeeinheit 16 bzw. einen Aufnahmebereich zur Aufnahme des Rohrelements 2 in zumindest einem Betriebszustand. Die Enden 26, 27 sind an einer von einem beweglich gelagerten Ende 7 der Schneideinheit 6 abgewandten Seite angeordnet. Die Enden 26, 27 sind in einer von der Schneideinheit 6 weg weisenden Richtung ausgerichtet.

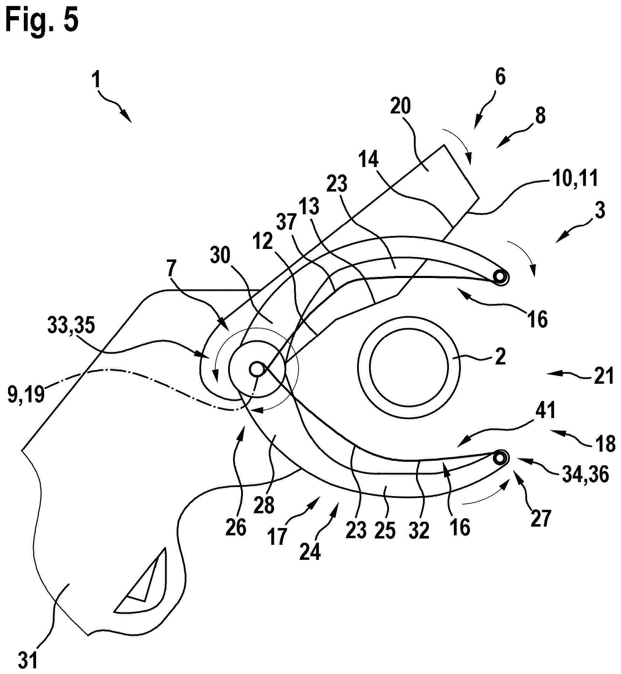

Die Halteeinheit 24 weist ein weiteres Halteelement 30 auf (Fig. 5). Das weitere Halteelement 30 ist analog zu dem Halteelement 25 ausgestaltet. Das weitere Halteelement 30 ist konträr zu dem Halteelement 25 ausgebildet. Beide Halteelemente 25, 30 sind drehbar am und gegenüber dem Maschinengehäuse 31 gelagert.

Die Auflageeinheit 16 weist ein Auflageelement 32 zur Auflage des Rohrelements 2 auf. Das Auflageelement 32 ist einteilig (Fig. 1, Fig. 2, Fig. 5) oder mehrteilig (Fig. 3, Fig. 4) ausgebildet. Das Auflageelement 32 ist elastisch bzw. ist aus einem elastischen Werkstoff gebildet. Das Auflageelement 32 ist vorzugsweise aus einem biegeschlaffen Werkstoff gebildet und als eine Art Riemen bzw. Gurt (Fig. 1, Fig. 2, Fig. 5) oder einer Art Kette (Fig. 3, Fig. 4) ausgebildet. Das Auflageelement 32 ist aus einem zugfesten Werkstoff gebildet und kann bei weitem höhere Kräfte in Zugrichtung als in Biege- oder Druckrichtung standhalten. Das Auflageelement 32 ist, insbesondere zu 100%, aus einem Polyester, insbesondere einem hochfesten Polyester (PES HF), gebildet. Beispielsweise kann das Auflageelement 32 aus einem Gewebe gebildet sein. Das Auflageelement 32 weist eine Reißfestigkeit von mindestens 1000 kg auf. Das Auflageelement 32 weist eine Länge auf, welche deutlich länger ist als eine Breite und eine Stärke des Auflageelements 32. Das Auflageelement 32 ist rollbar. Das Auflageelement 32 ist im Fall von einer Kette (Fig. 3, Fig. 4) aus einem Metall-Werkstoff gebildet.

Das Auflageelement 32 ist an der Halteeinheit 24 angeordnet. Dazu weist das Auflageelement 32 ein erstes Ende 33 und ein dem ersten Ende 33 abgewandtes zweites Ende 34 auf. Die Enden 33, 34 sind drehfest (Fig. 1, 2) oder drehbar (Fig. 3, 4) an der Halteeinheit 24 angeordnet. Das Auflageelement 32 ist zwischen diesen Enden 33, 34 freihängend angeordnet. Das Auflageelement 32 weist eine maximale Erstreckung auf, welche gegenüber einem Abstand der beiden an der Halteeinheit 24 angeordneten Enden 33, 34 um höchstens 200 % und um mindestens 50 % größer ist. Das Auflageelement 32 erstreckt sich im Wesentlichen analog zu der Halteeinheit 24.

Die Halteeinheit 24 weist ein erstes freies Ende 35 und ein zweites freies Ende 36 auf. Die Schneideinheit 6 ist in einem Aufnahmezustand zwischen diesen beiden Enden 35, 36 angeordnet. Die beiden Enden 35, 36 sind voneinander abgewandt und die dieselbe Richtung ausgerichtet und bilden jeweils ein Ende im Wesentlichen einer U-Form der Halteeinheit 24. Die beiden Enden 35, 36 begrenzen einen Öffnungsbereich der Halteeinheit 24 und sind in der Höhe versetzt zueinander angeordnet sein. Beabstandet zu dem ersten Ende 35 und dem zweiten Ende 36 der Halteeinheit 24 ist die Halteeinheit 24 an dem Maschinengehäuse 31 der Schneidvorrichtung 3 angeordnet und mit dieser fest verbunden.

Es kann zweckmäßig sein, dass die Auflageeinheit 16 ein erstes Ende 33 aufweist, welches mit dem ersten Ende 35 der Halteeinheit 24 verbunden ist und ein zweites Ende 34 aufweist, welches mit dem zweiten Ende 36 der Halteeinheit 24 verbunden ist. Es kann ferner zweckmäßig sein, dass sich die Aufnahmeeinheit 16 von dem ersten Ende 33 bis zu dem zweiten Ende 34 erstreckt. Es kann ferner zweckmäßig sein, dass die Aufnahmeeinheit 16, insbesondere einteilig oder als ein durchgängig verbundenes Teil, ausgebildet ist.

Die Auflageeinheit 16 weist ein weiteres Auflageelement 37 auf, welches dem Auflageelement 32 gegenüberliegend angeordnet ist. Das weitere Auflageelement 37 ist analog und parallel zu dem Auflageelement 32 ausgebildet und angeordnet. Das Auflageelement 32 in an einer Seite des Halteelements 25 angeordnet und das weitere Auflageelement 37 ist an einer von der Seite abgewandten Seite des Halteelements 25 angeordnet (Fig. 2, Fig. 3).

Die Schneideinheit 6 ist in einem Aufnahmezustand zwischen einem ersten Ende 33 des Auflageelement 32 und einem zweiten Ende 34 des Auflageelements 32 angeordnet. Die Schneideinheit 6 erstreckt sich entlang einer Verbindungsgeraden zwischen dem ersten Ende 33 des Auflageelement 32 und dem zweiten Ende 34 des Auflageelements 32. Die Schneideinheit 6 ist in einem Schneidzustand an einer von den beiden Enden 33, 34 abgewandten Seite angeordnet. Die Schneideinheit 6 ist in einem Schneidzustand unterhalb der beiden Enden 33, 34 des Auflageelements 32 angeordnet.

Die Schneideinheit 6 weist ein um das Maschinengehäuse 31 beweglich gelagertes erstes Ende 7 und ein dem ersten Ende 7 abgewandtes freies zweites Ende 8 auf.

Das Auflageelement 32 bildet in einem Auflagezustand einen Flächenkontaktbereich 38 mit dem Rohrelement 2, welcher sich um das Rohrelement 2 herum erstreckt (Fig. 1, Fig. 2). Das Auflageelement 32 bildet in einem Auflagezustand, einen ersten Punk- oder Linienkontaktbereich 39 und einen zu dem ersten Punk- oder Linienkontaktbereich 39 beabstandeten zweiten Punkt- oder Linienkontakt 40 mit dem zu bearbeitenden Werkstück (Fig. 3, Fig. 4).

Die Kontaktbereiche 38, 39, 40 des Auflageelements 32 erstrecken sich um weniger als 180° und mehr als 10° eines Umfangs des Rohrelements 2. Das Auflageelement 32 weist einen ersten Auflageabschnitt 41 auf (Fig. 1, 2, 5). Das Auflageelement 32 weist einen zweiten Auflageabschnitt 42 auf (Fig. 3, 4). Die Auflageabschnitte 41, 42 begrenzen den Kontaktbereich 38 bzw. die Kontaktbereiche 39, 40 des Auflageelements 32. Die Auflageabschnitte 41, 42 sind in einem Auflagezustand und in einem Schneidzustand einander gegenüber angewinkelt und beabstandet.

Die Auflageabschnitte 41, 42 können in jedem Schneidzustand die Auflageabschnitte 41, 42 einander gegenüber einen Öffnungswinkel aufweisen, welcher kleiner als 180° und größer als 45 ° ist.

Die Schneideinheit 6 das zweite Ende 8 der Schneideinheit 6 ist in Richtung senkrecht zu einer Schneidebene 22 betrachtet, beabstandet zum Auflageelement 32 und zum Halteelement 25.

## Patentansprüche

1. Schneidevorrichtung, insbesondere Rohrschneidevorrichtung, mit einer Schneideinheit (6) zum Schneiden eines zu schneidenden Werkstücks, mit einer Auflageeinheit (16) zur Auflage des zu schneidenden Werkstücks und mit einer Halteeinheit (24) zum Halten der Auflageeinheit (16), **dadurch gekennzeichnet, dass** die Halteeinheit (24) ein erstes, insbesondere freies, Ende (35) und ein zweites, insbesondere freies, Ende (36) aufweist, wobei die Schneideinheit (6) in einem Aufnahmezustand zwischen diesen beiden Enden (35, 36) angeordnet ist.

2. Schneidvorrichtung nach Anspruch 1, **dadurch gekennzeichnet, dass** die Schneideinheit (6) gegenüber der Auflageeinheit (16) und/oder gegenüber der Halteeinheit (24), insbesondere bei einem Schneidvorgang, beweglich gelagert ist.

3. Schneidvorrichtung nach einem der vorhergehenden Ansprüche, **dadurch gekennzeichnet, dass** die Auflageeinheit (16) ein erstes Ende (33) aufweist, welches mit dem ersten Ende (35) der Halteeinheit (24) verbunden ist und ein zweites Ende (34) aufweist, welches mit dem zweiten Ende (36) der Halteeinheit (24) verbunden ist, wobei sich die Aufnahmeeinheit (16) von dem ersten Ende (33) bis zu dem zweiten Ende (34) erstreckt, wobei die Aufnahmeeinheit (16), insbesondere einteilig oder als ein durchgängig verbundenes Teil, ausgebildet ist.

4. Schneidvorrichtung nach einem der vorhergehenden Ansprüche, **gekennzeichnet durch** eine, insbesondere eine einzige, Aufnahmevertiefung (23) zur Aufnahme eines zu bearbeitenden Werkstücks.

5. Schneidvorrichtung nach einem der vorhergehenden Ansprüche, **gekennzeichnet durch** eine Halteeinheit (24) zum Halten der Auflageeinheit (16), insbesondere eines Auflageelements (32).

6. Schneidvorrichtung nach einem der vorhergehenden Ansprüche, **dadurch gekennzeichnet, dass** die Auflageeinheit (16) ein, insbesondere einziges, Auflageelement (32) aufweist, wobei das Auflageelement (32) einteilig ist.

7. Schneidvorrichtung nach einem der vorhergehenden Ansprüche, **dadurch gekennzeichnet, dass** die Schneideinheit (6), insbesondere in einem Aufnahmezustand, zwischen einem ersten Ende (33) des Auflageelements (32) und einem zweiten Ende (34) des Auflageelements (32) angeordnet ist.

8. Schneidvorrichtung nach einem der vorhergehenden Ansprüche, **dadurch gekennzeichnet, dass** das Auflageelement (32) aus einem elastischen und/oder einem biegeschlaffen Werkstoff gebildet ist, wobei das Auflageelement (32) als ein Riemen oder als eine Kette ausgebildet ist.

9. Schneidvorrichtung nach einem der vorhergehenden Ansprüche, **dadurch gekennzeichnet, dass** die Schneideinheit (6) ein, insbesondere beweglich gelagertes, erstes Ende (7) und ein dem ersten Ende (7) abgewandtes, insbesondere freies, zweites Ende (8) aufweist.

10. Schneidvorrichtung nach einem der vorhergehenden Ansprüche, **dadurch gekennzeichnet, dass** die Schneideinheit (6), insbesondere das zweite Ende (8) der Schneideinheit (6), in einem Aufnahmezustand beabstandet zur Aufnahmeeinheit (16) ist und/oder in einem Schneidzustand, insbesondere das zweite Ende (8) der Schneideinheit (6), mit der Aufnahmeeinheit (16) überlappt.
